# EUROPEAN PATENT APPLICATION

(11) **EP 3 299 782 A1**
(43) Date of publication of application: **28.03.2018**
(21) Application number: 15733779.1
(22) Date of filing: 21.05.2015
(51) Int. Cl.: G01K 1/02

(54) **METHOD AND SYSTEM FOR RECORDING AT LEAST ONE PARAMETER IN THE TRANSPORTATION OF PERISHABLE PRODUCTS**

(71) Applicant: Alonso Echevarría, Íñigo, 48100 Mungía Vizcaya (ES); Múgica Elorza, Pablo Julián, 08014 Barcelona (ES)
(72) Inventor: Alonso Echevarría, Íñigo, 48100 Mungía Vizcaya (ES); Múgica Elorza, Pablo Julián, 08014 Barcelona (ES)
(74) Representative: Balder IP Law, S.L.
(86) International application number: PCT/ES2015/070400
(87) International publication number: WO 2016/185054

(57) **Abstract**

A system and method for recording and managing at least one parameter associated with the transport of perishable products in a refrigeration container. The system comprises: at least one recording device (10), configured for being housed in the interior of a refrigeration container (20); the at least one recording device (10) comprises: at least one sensor for measuring said at least one parameter at repeated occasions during the time which said transport lasts; electronic storage means for storing data captured by said at least one sensor; and input/output means (18) configured for providing the data captured by the at least one sensor to an electronic device (40) by means of a local connection. The system also comprises downloading means for providing said data relating to at least one parameter from said electronic device (40) to the cloud (60) by means of the internet (70); and management and processing means for data coming from said at least one recording device (10), wherein said data management and processing means are configured for storing said data and providing them to a plurality of users (100) by means of a remote connection (90) for the management thereof according to parameters configured for each user (100).

## Description

### TECHNICAL FIELD

The present invention belongs to the sector of transport, in particular of perishable products; and more specifically to the temperature control and control of other parameters in the refrigeration chambers used for said transport.

### BACKGROUND OF THE INVENTION

In the sector of transport, whether it be in trucks, aeroplanes, ships, trains, etc., of perishable products, such as fresh foods or medicines, amongst other things, the products are normally transported in refrigeration chambers. At present, there exist a large number of recorders of various parameters, such as temperature recorders, temperature and relative humidity recorders and other sensors. Normally these recorders are composed of a device (physical medium) where the data are recorded and stored, for example temperature; and a mechanism through which the data are downloaded as individualised and manageable data from the device to the network or to another medium such as a PC, mobile telephone, etc.

Originally, the data were downloaded by means of their impression on paper, such that on this paper, a graphic was impressed showing the temperatures which had been recorded during the use of the device. These recorders are called mechanical temperature recorders. Later electronic temperature recorders began to be marketed. In these, the data were no longer downloaded on paper, but on the screen of a computer. To this end, originally two elements were required: software and a reader or interface.

For example, the French patent application FR3001721-A1 describes a system for ensuring that temperature requirements are met in transport in refrigeration chambers. The system is formed by a temperature sensor located in the interior of the refrigeration chamber connected to a CPU which records the temperatures recorded by the sensor. An interface (reader) also located in the chamber (for example embedded in a wall) allows an operator to collect the temperatures recorded by the CPU during the journey when the chamber arrives at its destination. The operator can thus verify that the temperatures to which the products have been subjected are within the suitable temperature range. The operator collects the temperatures recorded by the CPU, for example by way of a portable device, using an application which has been previously downloaded. The communication between the portable device and the CPU can be by means of a radio or wired interface.

The drawback with this type of systems is that they require the use of special equipment for the use of a specific system and those who have this equipment are only the receivers of the refrigerated container. That is to say, this system allows the management of the data recorded, but does not allow this information to be provided to other potential users interested in knowing the cold chain, unless the end user decides to share them. Furthermore, the large quantity of software and readers which the users of this type of devices had to have, made that the universality of the recorders be sought as a new value, in the sense that they could be downloaded without the need to use a reader or interface (for example using a USB reader) and allowing the software to be downloaded free of charge and in an easy manner from the internet.

From this point, the offer has evolved in a dual direction, in which at present there is: on the one hand, the use of receiving antennas at ports, warehouses, etc. These are upmarket temperature recorders which offer as the main novelty the immediate availability of the data. It is now not necessary for the data to be downloaded by the end receiver of the device, but rather the data are automatically downloaded each time that the signal emitted by the temperature recorder is captured by any antenna which has been installed for such purpose. The problem with this system is that it is very costly, since it is necessary to equip a large number of locations with antennas, which involves a wide deployment of installations and a lot of maintenance and the equipment itself, as it needs to be connected in a wireless manner, is very expensive and complex. In addition, seeking even further the universality in the downloading of the data, even dispensing with the need for software. In these systems, the device itself generates a file in a universal format, such as PDF or Excel, such that it tremendously facilitates the work of downloading the data. The device requires a USB port, which must be connected to a computer or to a mobile telephone so that data can be downloaded. However, as in the case of FR3001721-A1, the data are received only by the person who attends to the container, normally upon arrival of the same at its destination, depriving other individuals interested in monitoring the product of the access to the same (farmers or manufacturers, those responsible for logistics, the company responsible for transport, etc.).

### DESCRIPTION OF THE INVENTION

The present invention aims to solve the previous drawbacks by means of a method and system for recording at least one parameter of the cold chain in the transport of perishable products in refrigeration containers. The at least one parameter of the cold chain is the temperature in the interior of the container. Optionally other parameters are recorded.

In a first aspect of the invention, a system is provided for recording and managing at least one parameter associated with the transport of perishable products in a refrigeration container. The system comprises: at least one recording device configured for being housed in the interior of a refrigeration container; where each recording device comprises: at least one sensor for measuring said at least one parameter at repeated instances during the time which said transport lasts; electronic storage means for storing data captured by said at least one sensor; and input/output means configured to provide the data captured by the at least one sensor to an electronic device by means of a local connection. The system also comprises: downloading means for automatically taking (delivering, transferring) said data relating to at least one parameter from said electronic device to the cloud by means of the internet; and management and processing means for managing and processing the data coming from said at least one recording device, where said data management and processing means are configured for storing said data and providing them to a plurality of users by means of a remote connection for the management thereof in accordance with parameters configured for each user.

In a preferred embodiment, the at least one sensor incorporated in the at least one recording device is a temperature sensor.

The recording device can also comprise a CO₂ sensor and/or an ethylene sensor.

In a possible embodiment, the electronic device configured for receiving by means of a local connection the data captured by a recording device and for taking the data automatically to the cloud by means of the internet is a portable or desktop computer or a PDA (Personal Digital Assistant) or a tablet or a mobile telephone, or a smartphone or a portable reader device or any electronic device which comprises a memory and a processor.

In a possible embodiment, the local connection between a recording device and an electronic device is a wireless connection, such as Bluetooth, Wi-Fi or RFID, or a wired connection, such as USB, mini USB or micro USB.

In a possible embodiment, the downloading of data in the electronic device is carried out after executing a computer application in said electronic device.

In a possible embodiment, the management and processing means provide said data to the user by means of a web page. Alternatively, the data are provided by means of a computer application downloaded in an electronic device of said user with a connection to the internet.

In a possible embodiment, the users can select the data of interest provided in said data management and processing means to compare them, combine them and/or draw conclusions with respect to one or more parameters selected by the user themselves, parameters which can be the same or different from those selected by other users and manage them by means of creating alarms and/or filter associated with one or more containers.

In a possible embodiment, the system comprises a plurality of recording devices, each one of which is associated with a respective container.

In another aspect of the invention, a method is provided for recording and managing at least one parameter associated with the transport of perishable products in a refrigeration container. The method has the steps of: in at least one recording device housed in the interior of a refrigeration container, measuring a determined parameter at repeated instances during the time which said transport lasts; storing said measurements in the recording device in which they have been taken; by means of a local connection, providing the data recorded by the at least one recording device to an electronic device; automatically providing (taking) said data relating to at least one parameter from said electronic device to the cloud by means of the internet; storing said data and providing them to a user by means of a remote connection for the management thereof in accordance with parameters configured by each user.

In a possible embodiment, the local connection between a recording device and an electronic device is a wireless connection, such as Bluetooth, Wi-Fi or RFID, or a wired connection, such as USB, mini USB or micro USB.

In a possible embodiment, the downloading of data in said electronic device is carried out after executing a computer application in said electronic device.

In a possible embodiment, the user accesses said stored data by means of a web page. Alternatively, the user accesses the stored data by way of a computer application downloaded in an electronic device of said user with a connection to the internet.

In a possible embodiment, the user selects the data of interest by means of creating alarms and/or filters associated with one or more containers and/or one or more parameters.

The system and method of the invention allow a significant reduction in the arbitrariness (or at least in the randomness) when the data relating to parameters of perishable goods is downloaded and allow these data to be passed on to any user involved in said transport.

The advantages of the invention become apparent in view of the description which is given below.

### BRIEF DESCRIPTION OF THE DRAWINGS

In order to complement the description and with the aim of aiding a better understanding of the characteristics of the invention, in accordance with a practical exemplary embodiment of the same, a set of figures are attached as an integral part of the description, in which the following is depicted in an illustrative and non-limiting manner:
Figure 1 shows a diagram of the exploded view of a recording device according to a possible implementation of the invention.
Figure 2 shows a view of the device in Figure 1, in which the cap has been removed and a possible implementation of the input/output means can be observed.
Figure 3 shows the recording device in Figures 1 and 2.
Figure 4 shows a diagram of the architecture of the recording system according to an embodiment of the invention.

### DESCRIPTION OF A MODE OF EMBODIMENT OF THE INVENTION

In this text, the word "comprises" and its variants (such as "comprising", etc.) are not to be interpreted in an exclusionary manner, that is to say, they do not exclude the possibility that what is described includes other elements, steps etc.

In the context of the present invention, the term "approximately" and the terms in its family (such as "approximate", etc.) are to be understood as indicative values which are very close to those which accompany the previously mentioned term. That is to say, a deviation within the acceptable limits based on an exact value should be accepted since the person skilled in the art understands that said deviation based on the indicated values is inevitable due to the imprecisions of the measurement, etc. The same applies to the terms "around" and "substantially".

The recording system of the invention is formed by different physical and logical elements. The main physical element is a recording device 10 for recording and locally storing parameters of the interior of a refrigeration container, chamber or box. Hereinafter, throughout this text, reference will be made to the "refrigeration container" to indistinctly indicate a refrigeration container, chamber or box. Refrigeration containers normally travel in trucks, aeroplanes, ships or trains. Non-limiting examples of perishable products that are normally transported in these refrigeration containers are fruits, vegetables, fish, meat and medicines. For recording parameters relating to the conditions of transport of these products, a device 10 must be located in each one of the refrigeration containers which are sought to be monitored. The recording device 10 can be located in any place in the interior of said container, whether inside smaller boxes which are in the interior of the container or secured to the exterior of said boxes, or in any another place. It endures temperatures which vary between -80° C and 95° C. The device 10 is capable of monitoring at least the temperature of said refrigeration container. The precision of the temperature sensor is at least 1.5° C and preferably about 0.5° C. Other parameters which the device 10 can monitor are the relative humidity, the level of one or more gases (such as CO₂, ethylene or others) or impacts that the goods transported in the interior have received, amongst others. The device 10 can also comprise, as a function of the parameter(s) which are desired to be monitored, at least one light sensor, at least one humidity sensor and/or, as the case may be, at least one gas sensor. The device 10 has a maximum memory capacity of about 130,000 measurements. A preferred device 10 has a minimum memory capacity of about 12,000 measurements. It includes a battery, preferably non-rechargeable.

The device 10 is the physical medium in which the data of interest are recorded and stored (preferably at least the temperature in the interior of the refrigeration container). The parameter or parameters of interest are recorded in a continuous manner, that is to say, they are not recorded in an isolated or exceptional manner, but repeated times during the time which the transport of the container lasts. The measurements of each parameter can be taken either periodically or in a non-periodic manner, for example randomly. The measurements are preferably taken in a periodic manner, for example every 10 or 15 minutes.

In a minimum configuration, the device 10 has at least one sensor and electronic storage means for storing the data captured by the at least one sensor. Preferably it has at least one temperature sensor. The electronic means are for example an electronic board. The electronic means for recording and storing data comprise: processing means, such as a microprocessor; and storage means, such as a memory. The electronic board can also have any other conventional element, which as an expert understands, may be necessary for recording and storing the data captured by the sensor. The electronic board (specifically its microprocessor or processing chip) may be programmable before use, such that for example alarms are generated within the device itself; or it may not be programmable. The device 10 also comprises input/output means compatible with any conventional communication interface, such as Bluetooth, RFID, USB, etc., preferably in the form of an input/output port to provide the information recorded in the electronic means. Optionally, the input/output means can be used to introduce information, such as configuration or programming information.

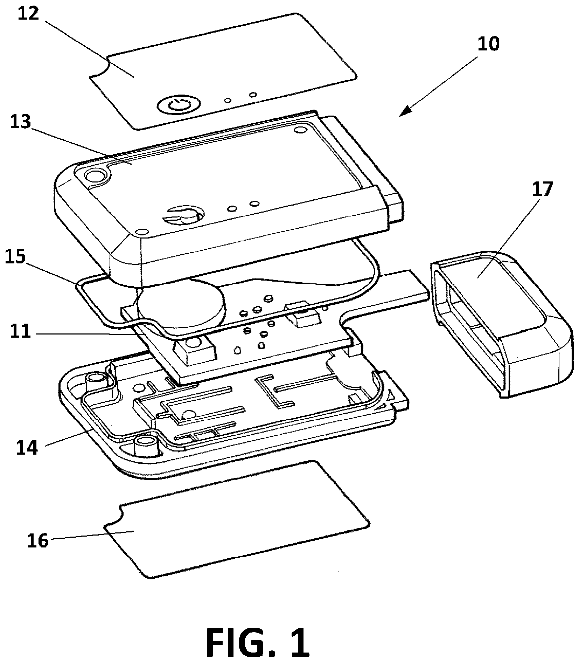

Figure 1 shows a diagram of the exploded view of a recording device 10 according to a possible implementation of the invention. The device 10 of this embodiment includes the electronic means 11 already mentioned, at least one sensor, preferably a temperature sensor (not shown) and optionally other elements which provide the device with optimised features. These additional elements can be (one, various or all of them): input/output means 12 in the form of a keyboard or display to facilitate the use of the device 10 by a user (for example an operator); a screen (not shown); a case or casing, preferably plastic and also preferably in the form of an upper case (upper casing) 13 and a lower case (lower casing) 14 to protect the electronic means 11; a seal 15 to provide the electronic means 11 with water-tightness, located between the upper and lower case; an identifying sticker 16; and a cap or lid 17 to allow access to the electronic means and to the sensor(s), in turn allowing the isolation thereof from the exterior (dirt, humidity, etc.). In figure 1, the input/output means are not visible. Alternatively to the protective case (casing), a protective film can be used, preferably plastic, not shown. In the case of incorporating a keyboard or display 12, optionally, this can be provided with one or various on/off buttons, sound alarm, etc. Alternatively, the device can be provided with other activation mechanisms, such as activation by pulling on a strip which activates the apparatus. Preferably, the at least one sensor is inside the device, thus facilitating the water-tightness and reducing the response speed to reach the exact measurement of temperature or other values. The device 10 is watertight. The device 10 has been designed to meet the IP65 protection grade of the international standard, IEC 60529 Degrees of Protection against water and dust particles.

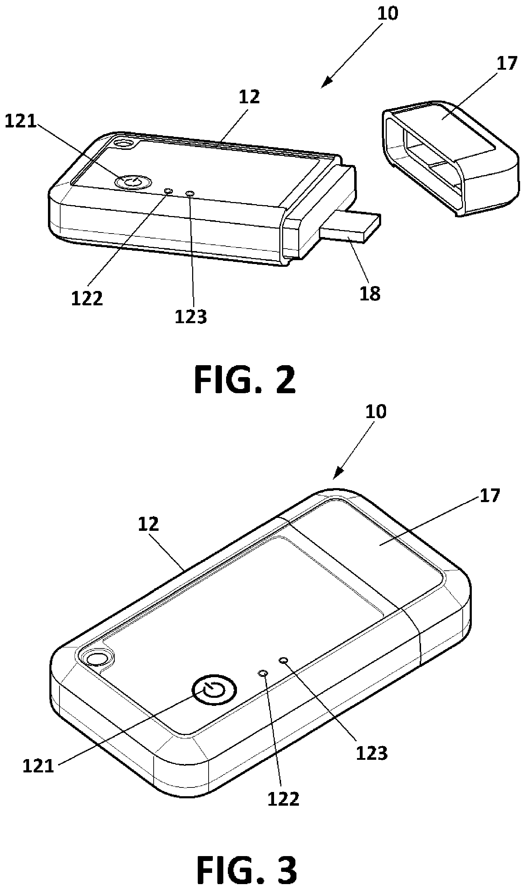

Figure 2 shows a view of the device 10 of figure 1, in which the cap 17 is removed and a possible implementation of the input/output means 18 can be observed. The input/output means 18 allow the downloading of the data recorded by the sensor(s) and stored in the electronic means 11 (specifically in the storage means) to an external device by means a local connection, that is to say, a connection which requires the presence of both devices in the same location. In other words, a local connection is understood to be a connection which is not remote, but both devices are separated at a maximum distance of a number of meters. The connection can be wired or wireless. By way of these input/output means 18, the data can be downloaded point to point by means of any system or technology for conventional data transmission, whether it be wireless (Bluetooth, Wi-Fi, RFID, etc.) or wired (USB, mini USB, micro USB or any other conventional interface). In the preferred implementation in figure 2, the input/output means 18 are a USB connector. The device to which the data are downloaded can be any device which comprises at least data input/output means compatible with those of the device 10 and storage means (for example, memory) for storing said information. Non-limiting examples of such a device to which the information stored in the device 10 is downloaded are: portable or desktop computer, PDA, tablet, mobile telephone, smartphone, etc. The device 10 allows the downloading of the individualised and manageable data. The data are preferable binary coded.

Figure 2 shows a preferred embodiment of the recording device 10 in which a single button for turning on and turning off 121 and two luminous indicators 122, 123, preferably LEDs, are included, which indicate the status in which the device 10 is. Figure 3 shows the same recording device 10 with the cap 17 closing the rest of the device, thus protecting the input/output means 18. By way of example, if the first luminous indicator 122 is turned on, this means that the device 10 is turned on and recording (according to the recording pattern with which it has been programmed). If the second luminous indicator 123 is turned on, this means that the device 10 is inactive (turned off). If the two luminous indicators 122, 123 are turned on, this means that the recording has ended, whether due to full memory or due to a manual stop. The device 10 has a maximum period of recording imposed by the electronics (e.g. memory capacity). Optionally, a minimum recording time can be imposed.

Preferably the recording device 10 is a single use device, therefore it only has one cycle for turning on, recording and turning off. Alternatively, the device 10 can have various uses, allowing the turning on and off thereof various times. Once the device 10 is turned on, after a brief transitory period, the device starts to take measurements, whether periodically or not periodically, according to how it has been programmed.

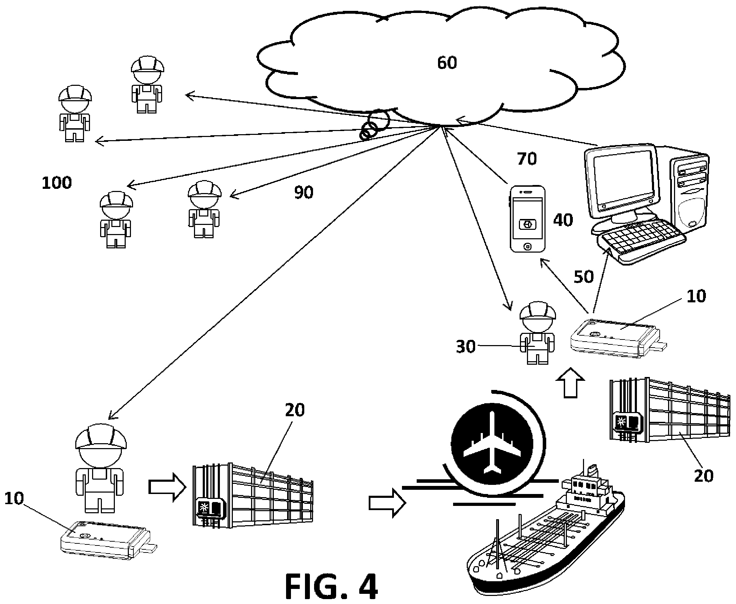

Figure 4 shows a diagram of the architecture of the recording system according to a possible embodiment of the invention. In figure 4 a device 10 associated with a refrigeration container 20 has been depicted. The perishable products travel in the container 20, the parameters of which products are sought to be monitored. During the transport of the container 20 (by ship, aeroplane, truck, etc.), the device 10 travels in the interior of the container 20, whether inside a box of the shipment or outside the same, since due to its water-tightness, it does not need to be protected. Upon its arrival at the destination, before removing the products from the container 20, an operator 30 removes the device 10 to proceed with the downloading of the data recorded during the entire journey. These data relate mainly to the series of temperature/time which has been produced during the transport and which are contrasted with the temperature which the products should have theoretically maintained in the cold chain. These data have been captured by the at least one sensor and recorded in the memory of the device 10 in the form of a data packet, preferably in binary format, for its better compression. As has already been indicated, the device 10, by way of its sensor(s), takes data of each parameter of interest in a repeated manner, whether periodically or not periodically. Although in figure 4 a single container 20 is shown with the corresponding device 10 thereof, in reality the system is preferably formed by a plurality of containers with the corresponding recording devices thereof.

The operator 30, when accessing the device 10 which travels with the container 20, carries a conventional electronic device 40, preferably a portable electronic device. The electronic device 40 can be for example a portable or desktop computer, a PDA, a tablet, a mobile telephone, a smartphone, a portable reader device or any electronic device which comprises a memory and a processor. In figure 4, two examples (smartphone and desktop computer) are shown, however, it is sufficient that the operator 30 carries only one of these. The electronic device 40 optionally has a screen or display for visualising information. By means of the input/output means 18 of the device 10, a connection is established with a corresponding port of the electronic device 40. The connection 50 between the recording device 10 and the electronic device 40 is established by means of any conventional data transmission system or technology, whether wireless (for example Bluetooth, Wi-Fi, RFID, etc.) or wired (USB, mini USB, micro USB or any other conventional interface). The data downloaded from the recording device 10 are received in the electronic device 40. The information (data) relating to the measurements of one or more parameters taken at different moments in time during the journey travelled by the container 20, is downloaded by the operator 30 in their conventional electronic device 40 thanks to a specific software for such purpose. Preferably the electronic device 40 has a software application (APP) installed which allows such download to be carried out.

Once these data have been received and read, by means of said application, the electronic device 40 is capable of uploading them 70 automatically to the web (internet) or to the cloud, provided the electronic device 40 has a connection of any type to the internet; in the event that no connection is promptly available, it uploads the data on the first occasion when the connection is recovered. That is to say, the application installed on the electronic device 40 is designed, once the data has been received in the electronic device 40, to send these data to the cloud 60 automatically, without the need for anyone handling or selecting a determined option on the electronic device 40. As has been said, if at this moment, the electronic device 40 does not have a connection to the internet, the uploading of the data to the cloud 60 is postponed until such a connection is available, however, always in an automatic manner. In figure 4, the link which allows the data to be uploaded to the cloud 60 is depicted by the reference numeral 70. This is allowed thanks to the previous software application, designed for such purpose, available on the device 40 of the operator, provided the electronic device 40 has a connection to the internet 70, whether wireless (for example a mobile telephone connection, for example a 3G connection, or a local connection, for example Wi-Fi) or wired (for example by means of fibre optics or coaxial cable) which allows such uploading of data. In the case that the electronic device 40 of the operator 30 does not have the previous internet connection at this moment, the sending of data remains as a pending task in the application of the electronic device 40, waiting to be executed and the data (file) sent to the cloud 60 as soon as the device 40 is connected to the internet. The data recorded are uploaded to the cloud 60, that is to say, to a local server located on the internet, from the electronic device 40 of the operator 30. Preferably, a code is also uploaded, the code being associated with the recording device 10 and therefore to the container 20, the parameters of which are recorded. Also preferably, together with the data, an identifying code of the device 40 is also uploaded. This subsequently allows the users, who desire to access the information, to indicate which device(s) 40 and/or recording devices 10 (and therefore associated container) are of interest to them.

In an alternative embodiment, it is not necessary for the operator 30 to access the recording device 10 associated with the container 20, but rather the electronic device 40 50 can be located in the vicinity of the container, for example in a warehouse or in the port, such that when this electronic device 40 50 detects the recording device 10 in its wireless coverage area (for example, Wi-Fi), it proceeds to automatically download the data from the same to, in turn, transfer them 70 automatically to the cloud 60 by means of an internet connection. In a more particular embodiment, the electronic device 40 50 has coverage via satellite (for example it is located in the bridge (of a ship)) and by way of this coverage via satellite it uploads 70 the data downloaded from the recording device 10 to the cloud 60.

Once the information has been uploaded 70, a processing system for the data, not shown in figure 3, housed for example in the cloud or in an internet server, allows the visualisation and management of all the data recorded (both in the device 10 shown and in the rest of similar recording devices used by the fleet of containers). This management of recorded data is carried out as a function of parameters which each user 100 can determined, a priori or a posteriori. Examples of users 100 are any person or entity which is interested in knowing the cold chain of the good transported.

The access to the data by the interested users 100 is preferably carried out by way of a web page. Alternatively, said access is carried out by way of an application designed for such purpose which the users 100 have downloaded on an electronic device, such as a computer, tablet or smartphone, with internet access. In the case of a web page, each user 100 accesses, after identification for example by means of a user and password, the web page. Each user, having the identifying code of an electronic device 40 or of a recording device 10 (and therefore of the associated container 20), can add it to his list of devices. Thus, any user 100 interested in the status of the transported goods, can, from any device with an internet connection, whether a portable or desktop computer, tablet, mobile telephone or other similar device, download the information (or part thereof) relating to the parameters recorded during the transport in the containers. For security and privacy reasons, the users 100 have to register on a website, by way of which they can access the previous data. On said website, each authorised user can select the data of interest and process them according to specific criteria selected by the user himself, ad hoc for each user, such as creating alarms and/or classifying the information as a function of fields which each user can create. Each user 100 can therefore filter as a function of classification criteria created by the user himself. This therefore allows the user to manage his information in a statistical manner and take decisions based on multiple data. In a possible embodiment, the user 100 selects the data associated with a specific recording device 10, in turn associated with a specific container 20, whether by way of an identifier of the container 20 or an identifier of the recording device 10. It is also possible to register all the devices 10 of interest in one account associated with the user in order to manage, in a combined manner (for example statistically), the information provided by all of these devices. Therefore, the cited website is a control centre which allows the devices to be monitored. For example, for each recording device 10 associated with a container 20, the maximum temperature, the minimum temperature and the average temperature of the period being recorded is offered, as well as other statistical data which the user desires to obtain with respect to the private information which they decide to associate with each one of the devices in relation to the data downloaded from the electronic device 40. In the case that the users 100 access the information from an application downloaded on an electronic device with internet access, instead of by way of a web page, the procedure is similar to that described in this paragraph.

In addition, the control centre offers the possibility of notifying the user 100 when the records of one of his devices 10 are outside the range of previously established thermal limits. These notifications are performed in the form of alerts sent to a device selected by the user 100, for example by means of email or another messaging format. The limits can be established in different ways: as standard alarms, established by the user 100, which are applied by default to all their shipments. Or alarms with technical limits, in which a thermal range which is desired to be monitored is established. Optionally, this alarm can be dependent on the measurements being outside the range for a time greater than a certain threshold. A shipment receipt alarm can also be configured.

In addition, the invention is not limited to the specific embodiments which have been described, but also covers, for example the variants which can be realised by the person skilled in the art (for example, in terms of the selection of materials, dimensions, components, configuration, etc.), within the scope of what can be deduced from the claims.

## Claims

1. A system for recording and managing at least one parameter associated with the transport of perishable products in a refrigeration container, **characterized in that** it comprises:
- at least one recording device (10), configured for being housed in the interior of a refrigeration container (20); wherein the at least one recording device (10) comprises:
- at least one sensor for measuring said at least one parameter at repeated occasions during the time which said transport lasts;
- electronic storage means for storing data captured by said at least one sensor; and
- input/output means (18) configured for providing the data captured by the at least one sensor to an electronic device (40) by means of a local connection;
- download means for automatically transferring said data relating to at least one parameter from said electronic device (40) to the cloud (60) by way of the internet (70);
- management and processing means for managing and processing said data coming from said at least one recording device (10), wherein said management and processing means are configured for storing said data and providing them to a plurality of users (100) by way of a remote connection (90) for the management thereof according to parameters configured for each user (100).

2. The system according to claim 1, wherein said at least one sensor comprised in said at least one recording device (10) is a temperature sensor.

3. The system according to any one of the preceding claims, wherein said at least one recording device (10) also comprises a CO₂ sensor.

4. The system according to any one of the preceding claims, wherein said at least one recording device (10) also comprises an ethylene sensor.

5. The system according to any one of the preceding claims, wherein said electronic device (40) configured for receiving by means of a local connection the data captured by a recording device (10) and for automatically transferring said data to the cloud (60) by way of the internet (70) is a portable or desktop computer, or a PDA, or a tablet, or a mobile telephone or a smartphone or a portable reader device or any electronic device which comprises a memory and a processor.

6. The system according to any one of the preceding claims, wherein said local connection (50) between a recording device (10) and an electronic device (40) is a wireless connection, such as Bluetooth, Wi-Fi or RFID, or a wired connection, such as USB, mini USB or micro USB.

7. The system according to any one of the preceding claims, wherein said downloading of data in said electronic device (40) is carried out after executing a computer application in said electronic device (40).

8. The system according to any one of the preceding claims, wherein said management and processing means for managing and processing said data of said at least one recording device (10) provides said data by way of a web page to a user (100).

9. The system according to any one of claims 1 to 7, wherein said management and processing means for managing and processing said data of said at least one recording device (10) provides said data, by way of a computer application downloaded in an electronic device of said user (100) having an internet connection.

10. The system according to any one of the preceding claims, wherein a user (100) selects the data of interest provided in said management and processing means in order to compare them, combine them and/or draw conclusions with respect to one or more parameters selected by the user himself (100), which can be the same or different from those parameters selected by other users, and manage them by means of creating alarms and/or filters associated with one or more containers (20).

11. The system according to any one of the preceding claims, the system comprising a plurality of recording devices (10), each one of which is associated with a respective container (20).

12. A method for recording and managing at least one parameter associated with the transport of perishable products in a refrigeration container, **characterised by** the steps of:
- in at least one recording device (10) housed in the interior of a refrigeration container (20), measuring a determined parameter at repeated instances during the time which said transport lasts;
- storing said measurements in the recording device (10) in which they have been taken;
- by way of a local connection (50), providing the data recorded by the at least one recording device (10) to an electronic device (40);
- automatically transferring said data relating to at least one parameter from said electronic device (40) to the cloud (60) by way of the internet (70);
- storing said data and providing them to a user (100) by way of a remote connection (90) for its management thereof in accordance with parameters configured for each user (100).

13. The method according to claim 12, wherein said local connection (50) between a recording device (10) and an electronic device (40) is a wireless connection, such as Bluetooth, Wi-Fi or RFID, or a wired connected, such as USB, mini USB or micro USB.

14. The method according to any one of claims 12 or 13, wherein the downloading of data in said electronic device (40) is carried out after executing a computer application in said electronic device (40).

15. The method according to any one of claims 12 to 14, wherein said user (100) accesses said stored data by way of a web page.

16. The method according to any one of claims 12 to 14, wherein said user (100) accesses said stored data by way of a computer application downloaded in said electronic device of said user (100) with connection to the internet.

17. The method according to any one of claims 12 to 16, wherein a user (100) selects the data of interest by means of creating alarms and/or filters associated with one or more containers (20) and/or one or more parameters.
